(19) **Europäisches Patentamt European Patent Office Office européen des brevets**

(11) **EP 1 793 208 B1**

(12) **FASCICULE DE BREVET EUROPEEN**

(45) Date de publication et mention de la délivrance du brevet:
**11.02.2009 Bulletin 2009/07**

(51) Int Cl.:
***G01D 5/24*** *(2006.01)* ***H02N 1/00*** *(2006.01)*

(21) Numéro de dépôt: **05111536.8**

(22) Date de dépôt: **30.11.2005**

(54) **Système de commande à basse puissance régulée pour actionneurs électrostatiques**

Geregeltes Steuersystem mit niedriger Leistung für elektrostatischen Betätiger

Low power regulated control system for electrostatic actuators

(84) Etats contractants désignés:
**AT BE BG CH CY CZ DE DK EE ES FI FR GB GR HU IE IS IT LI LT LU LV MC NL PL PT RO SE SI SK TR**

(43) Date de publication de la demande:
**06.06.2007 Bulletin 2007/23**

(73) Titulaire: **ETA SA Manufacture Horlogère Suisse 2540 Grenchen/Granges (CH)**

(72) Inventeurs:
• **Blondeau, Fabien 2525, Le Landeron (CH)**
• **Fleury, Emmanuel 2740, Moutier (CH)**

• **Meister, Pierre-André 2502, Biel (CH)**
• **Zanetta, André 2000, Neuchâtel (CH)**

(74) Mandataire: **Vigand, Philippe et al ICB, Ingénieurs Conseils en Brevets SA, Rue des Sors 7 2074 Marin (CH)**

(56) Documents cités:
EP-A- 0 865 151 US-A1- 2001 048 784
US-B1- 6 438 010 US-B1- 6 933 873

**Description**

DOMAINE TECHNIQUE

La présente invention concerne, de manière générale, un système de commande à basse puissance régulée pour actionneurs électrostatiques, un servomécanisme commandé par un tel système de commande, un appareil électronique portable incorporant un tel servomécanisme.

On entend par actionneur, un organe de puissance comme par exemple un servomoteur, moteur pas à pas, moteur couple, électro-aimant, ou tout autre dispositif actionnant un organe dans un servomécanisme. On entend par servomécanisme, un système asservi comportant un ou plusieurs organes à fonction mécanique. L'organe à fonction mécanique est généralement un actionneur.

ARRIERE-PLAN TECHNOLOGIQUE

Il est connu dans l'art antérieur, des systèmes de commande d'un servomécanisme basés sur l'utilisation d'un organe de commande mobile entre des première et deuxième positions définissant une grandeur électrique variable. Un exemple d'un tel organe de commande mobile est un organe d'entraînement en peigne, encore appelé "comb drive" selon la terminologie anglaise.

Les "comb drives", qui sont utilisés dans les systèmes électromécaniques MEMS, nécessitent des tensions de fonctionnement relativement importantes (40-600V) pour obtenir des forces intéressantes. L'électronique disponible actuellement permet de commander ces "comb drives" sans problème fonctionnel particulier. Le problème réside dans l'optimisation de la consommation du système. Les problèmes principaux sont les suivants:

- le maintien de systèmes électroniques alimentés à « haute tension » (40-600V) engendre des courants de fuites conséquents et/ou des mises en oeuvres particulières pour limiter ces courants de fuites;
- les capacités "comb drives" actuelles étant de l'ordre de quelques pF à quelques dizaines de pF, les capacités parasites alimentées par ces hautes tensions participent significativement aux pertes du système;
- la force électrostatique des "comb drives" est fonction du carré de la tension appliquée entre les électrodes; le système doit garantir une tension suffisante pour assurer le mouvement dans une durée définie mais une tension supérieure se traduit finalement en perte (accélération démesurée du système suivi d'une absorption lors de l'arrêt en butée).

RESUME DE L'INVENTION

L'un des buts principaux de la présente invention est de pallier aux inconvénients susmentionnés en optimisant la consommation du système, pour cela il est important d'appliquer la bonne tension et/ou la bonne durée pour commander l'organe d'entraînement mobile.

A cet effet, selon un mode de réalisation la présente invention concerne un système de commande d'un servomécanisme comprenant un organe de commande mobile entre des première et deuxième positions définissant une grandeur électrique variable respectivement entre une grandeur minimum et une grandeur maximum, caractérisé en ce que le système de commande comprend en outre des moyens d'alimentation basse tension, des moyens d'augmentation de tension connectés aux bornes des moyens d'alimentation basse tension et délivrant en sortie une haute tension, des moyens de mesure d'une valeur de la grandeur électrique variable, alimentés par les moyens d'alimentation basse tension lorsque la haute tension est générée, et des moyens de régulation des moyens d'augmentation de tension agencés pour augmenter la haute tension délivrée pour une variation des valeurs mesurées de la grandeur électrique inférieure à un seuil de variation déterminé par le servomécanisme, respectivement pour diminuer la haute tension délivrée pour une variation des valeurs mesurées de la grandeur électrique supérieure au seuil de variation déterminé.

Des modes de réalisations avantageux font l'objet des revendications dépendantes du système de commande.

Selon un autre aspect, l'invention concerne également un servomécanisme comprenant un système de commande selon l'invention, et caractérisé en ce que le servomécanisme est sélectionné parmi les éléments suivants: servomoteur, moteur pas à pas, moteur couple, électro-aimant, aiguilles mobiles sur cadran, afficheurs optiques.

Avantageusement, le servomécanisme est un moteur électrostatique formé par technologie des systèmes micro-electro-mécaniques (MEMS).

Selon un autre aspect, l'invention encore un appareil électronique portable, en particulier une montre-bracelet comprenant un servomécanisme selon l'invention.

BREVE DESCRIPTION DES FIGURES

D'autres caractéristiques et avantages de la présente invention apparaîtront plus clairement à la lecture de la description détaillée qui suit de modes de réalisation de l'invention donnés uniquement à titre d'exemple non limitatif et illustrés par le dessin annexé où :

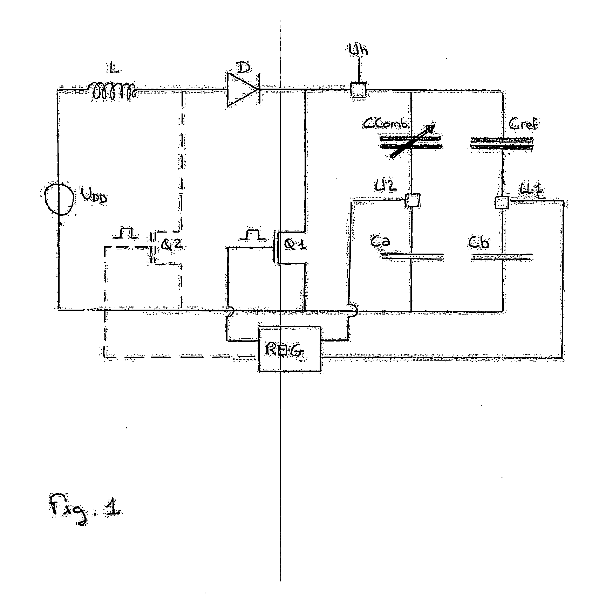

- la figure 1 est un schéma du système de commande selon deux modes de réalisations de l'invention.

DESCRIPTION DETAILLEE DE L'INVENTION

Conformément à un premier mode de réalisation de l'invention représenté sur la figure 1, pour lequel les éléments en pointillés ne doivent pas être considérés, le système de commande d'un servomécanisme comprenant un organe de commande mobile (non représenté) entre des première et deuxième positions définissant une grandeur électrique variable Ccomb respectivement entre une grandeur minimum Ccomb_min et une grandeur maximum Ccomb_max. Dans l'exemple représenté, la grandeur électrique variable est une capacité variable obtenue avantageusement par l'utilisation d'un organe mobile de commande tel un actionneur électrostatique, par exemple un organe d'entraînement en peigne. Le système de commande comprend en outre des moyens d'alimentation basse tension $U_{DD}$, par exemple inférieure ou égale à 5V, des moyens d'augmentation de tension connectés aux bornes des moyens d'alimentation basse tension et délivrant en sortie une haute tension Uh par exemple de l'ordre de 100V, et plus généralement pouvant être comprise entre 40 et 600V.

Selon le premier mode de réalisation représenté à la figure 1, les moyens d'augmentation comprennent une inductance L en série avec des moyens de découplage D et des moyens de commutation Q1 ayant une borne de commande et deux bornes de courant, l'inductance étant connectée en sortie des moyens d'alimentation basse tension $U_{DD}$ et les moyens de découplage D dont la sortie est connectée à une borne de courant des moyens de commutation Q1, l'autre borne de courant des moyens de commutation Q1 étant connectée à un potentiel de référence, par exemple la masse du système de commande, la borne de commande des moyens de commutation étant connectée à la sortie de moyens de régulation REG.

On comprendra bien évidemment que les moyens d'augmentation de tension du premier mode de réalisation selon l'invention sont donnés au titre de variante avantageuse, mais que d'autres circuits d'augmentation de tension plus classiques pourront être prévus à la place.

Le système de commande comprend encore des moyens de mesure d'une valeur de la grandeur électrique variable, alimentés par les moyens d'alimentation basse tension lorsque ladite haute tension est générée. Ces moyens de mesure selon une variante préférée comprennent une première branche connectée en parallèle des moyens de commutation Q1 et comprenant en série une première capacité Cref et une deuxième capacité Cb d'un ordre de grandeur supérieur à celui de la première capacité Cref, et une deuxième branche connectée entre la capacité variable Ccomb et le potentiel de référence et comprenant une troisième capacité Ca d'un ordre de grandeur supérieur à celui de la capacité variable Ccomb. La capacité variable Ccomb est définie par la position de l'organe de commande mobile et connectée entre la sortie des moyens d'augmentation de tension et les moyens de mesure. A titre d'exemple les valeurs suivantes de capacités pourront être choisies, Ccomb de l'ordre de 10 pF, Ca de l'ordre de 2nF, Cb de l'ordre de 100pF et Cref de l'ordre de 0.5pF.

Le système comprend encore des moyens de régulation REG des moyens d'augmentation de tension agencés pour augmenter la haute tension délivrée pour une variation des valeurs mesurées de la grandeur électrique Ccomb inférieure à un seuil de variation déterminé par le servomécanisme, respectivement pour diminuer la haute tension délivrée pour une variation des valeurs mesurées de la grandeur électrique supérieure au seuil de variation déterminé. Les moyens de régulation REG sont agencés pour fournir une impulsion de durée plus longue que la précédente sur la borne de commande des moyens de commutation Q1 pour augmenter la haute tension et pour fournir une impulsion de durée plus courte que la précédente sur la borne de commande des premiers moyens de commutation Q1 pour diminuer ladite haute tension.

Selon un deuxième mode de réalisation de l'invention comprenant tout les éléments du premier mode de réalisation sus présenté auquel il faut ajouter les éléments représentés en pointillés sur la figure 1. La différence entre les deux modes de réalisation au point de vue structurelle réside donc essentiellement dans les moyens d'augmentation de tension qui comprennent en outre, selon ce deuxième mode de réalisation, des deuxièmes moyens de commutation Q2 connectés entre la sortie de l'inductance L et le potentiel de référence.

Toujours selon ce deuxième mode de réalisation, les moyens de régulation REG sont agencés pour fournir une impulsion de durée plus longue que la précédente sur la borne de commande des deuxièmes moyens de commutation Q2 pour augmenter la haute tension et pour fournir une impulsion de durée plus courte que la précédente sur la borne de commande des deuxièmes moyens de commutation Q2 pour diminuer ladite haute tension. Les moyens de régulation REG sont agencés en outre pour fournir une impulsion sur la borne de commande des premiers moyens de commutation

Q1 pour diminuer la haute tension Uh.

Nous allons maintenant nous pencher à nouveau la figure 1 pour en comprendre le fonctionnement suivant les deux modes de réalisations sus présentés de l'invention. Comme cela a été mentionné en introduction de la description, les buts principaux de l'invention sont de maintenir la haute tension uniquement lorsque celle-ci est requise pour limiter les courants de fuites, de minimiser les composants sur la haute tension afin de limiter les capacités parasites sur la haute tension et d'adapter la tension d'activation en fonction des besoins du système directement mesurés.

Un circuit possible d'augmentation de tension est basé sur le transfert d'énergie d'une inductance utilisé comme source « haute tension ». Ce circuit à l'avantage de pouvoir définir l'énergie à transférer, donc indirectement la tension d'alimentation, en adaptant la durée durant laquelle le transistor Q1, selon le premier mode de réalisation, ou Q2, selon le deuxième mode de réalisation est conducteur.

Selon le premier mode de réalisation, le transistor Q1 est rendu conducteur pour court-circuiter l'inductance L, ce qui permet lorsque le transistor Q1 est de nouveau non conducteur, d'augmenter la tension délivrée par la source de tension $U_{DD}$ par décharge de la bobine L dans le réseau de capacités, la diode D permettant de découpler le système en deux et ainsi d'éviter que l'énergie transmise au réseau de capacités retournent dans la bobine. Ce premier mode de réalisation présente l'avantage d'avoir moins de capacités parasites comme cela peut être le cas avec une solution à deux transistors selon le deuxième mode de réalisation.

Selon le deuxième mode de réalisation, dans un premier temps le transistor Q2 est rendu conducteur pour court-circuiter l'inductance L, ce qui permet lorsque le transistor Q2 est de nouveau non conducteur, d'augmenter la tension Uh par décharge de la bobine L dans le réseau de capacités. Puis après actionnement du peigne mobile, le transistor Q1 est rendu conducteur pour diminuer la tension Uh.

Une caractéristique de ce circuit est que la tension Uh n'est pas maîtrisée sans boucle de régulation. Pour cela il est prévu une boucle de régulation REG se servant du réseau de capacités Ca, Cb, Cref pour exécuter une commande de feedback suivant les variations de la valeur de capacité Ccomb de l'organe mobile d'entraînement en peigne ou "comb drive". La capacité de ce "comb drive" varie entre Ccom_min et Ccom_max en fonction de la position du peigne mobile.

Pour exécuter cette fonction de feedback, il est prévu un système de mesure (Ca, Cb et Cref) directement alimenté durant l'application de la haute tension dans le but d'optimiser la commande. Le but est évidemment de maximiser l'énergie transférée dans Ccomb et donc d'avoir une tension U2(t) suffisamment petite mais permettant un traitement électronique simple, i.e. avec une tension U2(t) de préférence de l'ordre de 0.1-0.5V. A titre d'exemple la « haute tension » Uh peut être définie à 100V et Ccomb à 10 pF.

Les capacités Ca et Cref étant fixes dans la branche les contenant, la tension U1(t) est une image réduite de la tension Uh :

$$U1(t) = \frac{C_{ref}}{C_b + C_{ref}} Uh(t) \rightarrow Uh(t) = \frac{C_b + C_{ref}}{C_{ref}} U1(t) \quad [E1]$$

*Ca étant connu et fixe, la tension U2(t) représente la charge injectée dans l'autre branche contenant les capacités Ccom et Ca:*

$$U2(t) = \frac{1}{Ca} \int i_1(t) \cdot dt = \frac{1}{Ca} Q_1(t) \rightarrow Q_1(t) = Ca \cdot U2(t) \quad [E2]$$

Les valeurs de Ca et Cb sont définies (voir dans la suite du développement) pour obtenir des tensions U1(t) et U2(t) de l'ordre de 50 à 500 fois inférieures à Uh(t), donc négligeables en 1ère approximation par rapport à Uh(t). La tension aux bornes de Ccom peut être approximée à Uh(t), la valeur Ccom peut en être déduite :

$$C_{com}(t) \cong \frac{Q_1(t)}{Uh(t)} = \frac{C_a \cdot U2(t)}{Uh(t)} = C_a \frac{C_{ref}}{C_b + C_{ref}} \frac{U2(t)}{U1(t)} \quad [E3]$$

L'équation [E3] montre que Ccom(t) peut être mesurée en tout temps sans connaître la tension Uh(t) qui peut selon ce principe avoir une valeur quelconque, variant dans le temps, raisonnablement, sans perturber la valeur mesurée indirectement de Ccom(t).

Connaître la valeur de la capacité du comb drive dans le temps permet de déduire la position de celui-ci, se qui permet une régulation en fonction des besoins du système. Dans le cas d'un système basse puissance, les deux buts principaux visés par la régulation sont la confirmation du déplacement complet, que l'on déduit de la variation de la capacité et la minimisation de la consommation de l'énergie en optimisant la tension Uh soit l'énergie transférée.

La variation de la capacité Ccom permet de déduire directement la variation du mouvement, donc la vitesse de déplacement du peigne mobile, i.e. "comb drive". L'énergie mécanique fournie par l'intermédiaire d'Uh(t) peut être alors décomposée en deux parties. Premièrement, l'énergie pour vaincre les frottements, les forces/couples utiles et les éventuels forces de ressorts nécessaires au système et deuxièmement, l'énergie pour accélérer le système (inertie, énergie cinétique).

La « force » accélérant le système est la différence entre la force fournie par le peigne mobile soustraite des forces utiles, de frottements et des ressorts. Cette force doit être suffisante pour permettre le déplacement dans le temps voulu mais doit être maintenue le plus bas possible afin d'optimiser la consommation. Le temps à disposition est défini par l'application et peut varier selon le mode dans lequel le système se trouve.

Dans une application horlogère, par exemple une montre bracelet comprenant un moteur pas à pas, il peut être différent lors de la marche normale ou lors du réglage de l'heure. Si le temps utilisé pour le déplacement est déclaré trop long, le prochain pas sera exécuté avec plus d'énergie (impulsion de commande du transistor plus longue) et inversement si le temps utilisé pour le déplacement est déclaré trop court, le prochain pas sera exécuté avec moins d'énergie. Si le pas est déclaré non fait, il est exécuté une nouvelle fois avec beaucoup plus d'énergie pour garantir le pas et la durée d'impulsion sera rallongée pour le prochain pas.

Les forces pouvant varier significativement selon l'environnement du système (charge, frottements), l'adaptation de la tension permet de réduire considérablement la consommation par rapport à un système fournissant systématiquement la même tension garantissant le pas dans toutes les conditions.

Un mode de calibrage peut facilement être implémenté avec ce principe afin de déterminer la capacité maximum si celle-ci ou le système de régulation peuvent dériver dans le temps. Il suffit de transférer une quantité d'énergie suffisante à garantir le déplacement complet et d'en extraire les différentes valeurs. Bien que cela ne soit pas «économique» du point de vue énergétique comme cela doit être exécuté uniquement sporadiquement (par exemple 1 fois sur 1000) l'impact sur la consommation reste très modeste.

Selon le deuxième mode de réalisation utilisant les deux transistors Q1 et Q2, il est possible de transférer une quantité d'énergie supplémentaire en activant, au moyen d'une impulsion, le transistor Q2 si la confirmation de déplacement complet n'aboutit pas. Ce schéma permet de gérer les phases de transfert d'énergie et de réinitialisation du système de manière indépendante. Selon le premier mode de réalisation n'utilisant que le transistor Q1, ces phases sont dépendantes et complémentaires. Cependant, on notera que l'utilisation de deux transistors augmente les capacités parasites.

On notera que les capacités de mesures additionnelles ne pénalisent pas significativement le transfert de l'énergie au peigne mobile.

L'énergie électrique dans la capacité du peigne mobile est définie par l'équation suivante:

$$W_{com} = \frac{1}{2} C_{com} \cdot U_{com}^2 \quad \textit{[E4]}$$

La tension U2(t) est définie par la relation (a):

$$U2(t) = \frac{C_{com}(t)}{C_{com}(t) + C_a} Uh(t) \rightarrow \frac{U2(t)}{Uh(t)} = \frac{C_{com}(t)}{C_{com}(t) + C_a} \quad \textit{[E5]}$$

La capacité Ca est définie par la relation (b) :

$$C_a = \frac{1 + \dfrac{U2}{Uh}}{\dfrac{U2}{Uh}} C_{com} = 201 \cdot C_{com} \cong 2.01 \, nF \quad \textit{[E6]}$$

Le rapport d'énergie dans les deux capacités de la branche (Ccom, Ca) est :

$$\frac{W_{Ccom}}{W_{com}+W_{Ca}} = \frac{\frac{1}{2}C_{com}\left(Uh - \frac{C_{com}}{C_{com}+C_a}Uh\right)^2}{\frac{1}{2}C_{com}\left(Uh - \frac{C_{com}}{C_{com}+C_a}Uh\right)^2 + \frac{1}{2}C_a\left(\frac{C_{com}}{C_{com}+C_a}Uh\right)^2} \quad [E7]$$

$$\frac{W_{Ccom}}{W_{com}+W_{Ca}} = \frac{C_{com}\left(1 - \frac{C_{com}}{C_{com}+C_a}\right)^2}{C_{com}\left(1 - \frac{C_{com}}{C_{com}+C_a}\right)^2 + Ca\left(\frac{C_{com}}{C_{com}+C_a}\right)^2} \cong 99.5\%$$

La démarche est la même pour l'autre branche, le minimum d'énergie doit être injecté dedans. A titre d'exemple Cref peut être définie à 0.5 pF et la tension U1 à 0.5V. En appliquant la même démarche que [E5] et [E6] Cb = 100.5 pF.
Les capacités équivalentes pour chaque branche sont :

Capacité équivalente Ccomb/Ca:

$$Ccom\,//\,Ca = \frac{C_{com}+C_a}{C_{com}C_a} = \frac{202}{201}C_{com} \cong C_{com} \quad [E8]$$

Capacité équivalente Cref/Cb

$$Cref\,//\,Cb = \frac{C_{ref}+C_b}{C_{ref}C_b} \cong C_{ref} \quad [E9]$$

La tension sur les deux branches étant identique (Uh), le rapport d'énergie des 2 branches est le rapport des capacités Ccom / (Ccom + Cref) = 95%.
Ces calculs énergétiques montrent que pratiquement toute l'énergie est transférée dans le peigne mobile (Ccomb). D'autre part, les pads de connexions des circuits intégrés ont une capacité de l'ordre de 3-5 pF mais dans cette proposition, ces capacités viennent en parallèle à Ca et Cb qui sont largement plus importantes (2nF / 100pF) donc leur impact n'est pas pénalisant malgré des valeurs de capacités Ccomb et Cref de l'ordre des picofarads ou dizaines de picofarads. Si le système est totalement déchargé (ou déchargé à une valeur connue), il se réinitialise à chaque pas ce qui le rend peu sensible aux dérives engendrées par les différents courants de fuites.
Ce système à en outre l'avantage de travailler avec des tensions de mesures (U1, U2) ainsi que des tensions de commandes (Q1,Q2) « basses tensions » (0-1.5,3 ou 5V) donc intégrables dans un process microélectronique standard. Les seuls composants semi-conducteurs exposés à la « haute tension » sont la diode et le/les transistor(s) (Q1, (Q2)) à monter à choix selon les configurations. Ces composants existent sur le marché. Dans le souci d'optimisation de la consommation les transistors doivent avoir des capacités drain-bulk-source les plus faibles possibles.
Dans l'exemple d'application numérique, les rapports Ccomb/Ca et Cref/Cb sont très petits, ce qui permet de simplifier sans grandes erreurs l'équation [E3]:

$$C_{com}(t) \cong C_a \frac{C_{ref}}{C_b+C_{ref}}\frac{U2(t)}{U1(t)} \cong \frac{C_a}{C_b}\cdot\frac{U2(t)}{U1(t)}\cdot C_{ref}$$

Le système de régulation utilisant les 2 tensions U1(t) et U2(t) doit disposer d'une très grande impédance d'entrée afin de ne pas perturber les courants dans les deux branches. De telles impédances sont courantes dans le domaine de la microélectronique, notamment dans certains amplificateurs opérationnels.

L'invention sus décrite présente de nombreux avantages. Notamment le système de mesure permet de connaître la position et la vitesse de déplacement du peigne mobile électriquement, ce qui permet de quittancer le déplacement et d'optimiser la consommation en fonction du temps à disposition pour exécuter le déplacement. Cette mesure permet de mesurer l'impact des chocs sur la position du peigne mobile. Le système de mesure est indépendant de la tension d'alimentation, ce qui permet ainsi d'utiliser pratiquement n'importe quel système de génération « haute tension ». Le système de mesure n'affecte que très modestement l'énergie transférée au peigne mobile. Mise à part la génération de la « haute tension », le circuit de contrôle fonctionne à basse tension permettant l'intégration dans un process microélectronique standard. La « haute tension » n'est effectivement disponible uniquement lors de l'exécution du pas, le reste du temps le système travaille à basse tension.

On notera encore que l'invention concerne de manière plus générale un servomécanisme comprenant un système de commande selon l'une des modes de réalisations sus présentés, et dont le servomécanisme est sélectionné parmi les éléments suivants: servomoteur, moteur pas à pas, moteur couple, électro-aimant, aiguilles mobiles sur cadran, afficheurs optiques. Selon une application particulière, le servomécanisme est un moteur électrostatique formé par technologie des systèmes micro-electro-mécaniques (MEMS).

On comprendra que diverses modifications et / ou améliorations évidentes pour l'homme du métier peuvent être apportées aux différentes modes de réalisation de l'invention décrits dans la présente description, notamment on notera que les moyens de mesure peuvent être implémentés différemment en comprenant par exemple trois branches de capacités dimensionnées, que les moyens de régulation peuvent être implémentés sans difficulté par l'homme du métier par exemple au moyen de convertisseurs analogique numérique et d'un générateur d'impulsion à durée variable, et cela sans sortir du cadre de l'invention défini par les revendications annexées.

**Revendications**

1. Système de commande d'un servomécanisme comprenant

   - un organe de commande mobile entre des première et deuxième positions, ledit organe ayant une capacité variable (Ccomb) en fonction de sa position, cette capacité (Ccomb) variant entre une grandeur minimum (Ccomb_min) et une grandeur maximum (Ccomb_max);
   **caractérisé en ce que** le système de commande comprend en outre

      - des moyens d'alimentation basse tension ($U_{DO}$);
      - des moyens d'augmentation de tension (L, D, Q1; L, D, Q1, Q2) connectés aux bornes desdits moyens d'alimentation basse tension et délivrant en sortie une haute tension (Uh);
      - des moyens de mesure (Ca, Cb, Cref) d'une valeur de ladite capacité variable (Ccomb), alimentés par lesdits moyens d'alimentation basse tension lorsque ladite haute tension est générée; et
      - des moyens de régulation (REG) desdits moyens d'augmentation de tension agencés pour augmenter la haute tension délivrée lorsqu'une variation des valeurs mesurées de la capacité (Ccomb) est inférieure à un seuil de variation déterminé par ledit servomécanisme, et pour diminuer la haute tension délivrée lorsque cette variation est supérieure au dit seuil de variation déterminé, la variation des valeurs mesurées de la capacité permettant de déduire la vitesse de déplacement de l'organe mobile et donc sa position.

2. Système de commande selon la revendication 1, dans lequel ledit organe de commande mobile est un actionneur électrostatique.

3. Système de commande selon la revendication 2, dans lequel ledit actionneur électrostatique est un organe d'entraînement en peigne.

4. Système de commande selon l'une des revendications 1 à 3, dans lequel lesdits moyens d'augmentation de tension (L, D, Q1) comprennent une inductance (L) en série avec des moyens de découplage (D) et des premiers moyens de commutation (Q1) ayant une borne de commande et deux bornes de courant, ladite inductance étant connectée en sortie desdits moyens d'alimentation basse tension ($U_{DO}$) et les moyens de découplage dont la sortie est connectée à une borne de courant desdits moyens de commutation, l'autre borne de courant desdits moyens de commutation étant connectée à un potentiel de référence, la borne de commande desdits moyens de commutation étant connectée à la sortie desdits moyens de régulation.

**5.** Système de commande selon la revendication 4, dans lequel lesdits moyens d'augmentation de tension (L, D, Q1, Q2) comprennent en outre des deuxièmes moyens de commutation (Q2) connectés entre la sortie de ladite inductance (L) et ledit potentiel de référence.

**6.** Système de commande selon l'une des revendications précédentes, dans lequel lesdits moyens de mesure (Ca, Cb, Gref) d'une valeur de ladite capacité variable (Ccomb) comprennent:

- une première branche connectée en parallèle desdits premiers moyens de commutation (Q1) et comprenant en série une première capacité (Cref) et une deuxième capacité (Cb) d'un ordre de grandeur supérieur à celui de ladite première capacité, et
- une deuxième branche connectée entre ladite capacité variable (Ccomb) et ledit potentiel de référence et comprenant une troisième capacité (Ca) d'un ordre de grandeur supérieur à celui de ladite première capacité.

**7.** Système de commande selon la revendication 4, dans lequel lesdits moyens de régulation (REG) sont agencés pour fournir une impulsion de durée plus longue que la précédente sur ladite borne de commande desdits premiers moyens de commutation (Q1) pour augmenter ladite haute tension et pour fournir une impulsion de durée plus courte que la précédente sur ladite borne de commande desdits premiers moyens de commutation pour diminuer ladite haute tension.

**8.** Système de commande selon la revendication 5, dans lequel lesdits moyens de régulation (REG) sont agencés pour fournir une impulsion de durée plus longue que la précédente sur ladite borne de commande desdits deuxièmes moyens de commutation (Q2) pour augmenter ladite haute tension et pour fournir une impulsion de durée plus courte que la précédente sur ladite borne de commande desdits deuxièmes moyens de commutation pour diminuer ladite haute tension.

**9.** Système de commande selon la revendication 8, dans lequel lesdits moyens de régulation (REG) sont agencés en outre pour fournir une impulsion sur la borne de commande desdits premiers moyens de commutation (Q1) pour diminuer la haute tension.

**10.** Système de commande selon l'une des revendications 7 à 9, dans lequel les moyens de régulation sont agencés en outre pour fournir une impulsion très longue en cas de détection d'un échec lors de la commande précédente.

**11.** Servomécanisme comprenant un système de commande selon l'une quelconque des revendications précédentes, **caractérisé en ce que** ledit servomécanisme est sélectionné parmi les éléments suivants: servomoteur, moteur pas à pas, moteur couple, électro-aimant, aiguilles mobiles sur cadran, afficheurs optiques.

**12.** Servomécanisme selon la revendication 11, dans lequel ledit servomécanisme est un moteur électrostatique formé par technologie des systèmes micro-electro-mécaniques (MEMS).

**13.** Appareil électronique portable, en particulier montre-bracelet comprenant un servomécanisme selon l'une des revendications 11 ou 12.

**Claims**

**1.** Control system for a servomechanism including:

- a control member mobile between first and second positions, said member having a variable capacitance (Ccomb) being a function of its position, said capacitance (Ccomb) varying between a minimum quantity (Ccomb_min) and a maximum quantity (Ccomb_max);

**characterized in that** the control system further includes:

- low voltage powering means ($U_{DD}$);
- voltage increase means (L, D, Q1; L, D, Q1, Q2) connected to the terminals of said low voltage powering means and delivering a high voltage (Uh) at output;
- means (Ca, Cb, Cref) for measuring a value of said variable capacitance (Ccomb), powered by said low voltage powering means when said high voltage is being generated, and

- means (REG) for regulating said voltage increase means arranged for increasing the high voltage when a variation in said measured values of said variable capacitance (Ccomb) is lower than a variation threshold determined by said servomechanism, respectively for decreasing the high voltage delivered when a variation in said measured values of said variable capacitance (Ccomb) is higher than said determined variation threshold, the variation in said measured values of the capacitance allowing to deduce the speed of movement of the mobile member and hence its position.

2. Control system according to claim 1, wherein said mobile control member is an electrostatic actuator.

3. Control system according to claim 2, wherein said electrostatic actuator is a comb drive member.

4. Control system according to any of claims 1 to 3, wherein said voltage increase means (L, D, Q1) include an inductance (L) in series with uncoupling means (D) and first switching means (Q1) having one control terminal and two current terminals, said inductance being connected to the output of said low voltage powering means ($U_{DD}$) and the uncoupling means whose output is connected to one current terminal of said switching means, the other current terminal of said switching means being connected to a reference potential, the control terminal of said switching means being connected to the output of said regulating means.

5. Control system according to claim 4, wherein said voltage increase means (L, D, Q1, Q2) further include second switching means (Q2) connected between the output of said inductance (L) and said reference potential.

6. Control system according to any of the preceding claims, wherein said means (Ca, Cb, Cref) for measuring a value of said variable capacitance (Ccomb) include:

   - a first parallel connected branch of said first switching means (Q1) and including in series a first capacitance (Cref) and a second capacitance (Cb) of an order of magnitude greater than that of said first capacitance, and
   - a second branch connected between said variable capacitance (Ccomb) and said reference potential and including a third capacitance (Ca) of an order of magnitude greater than that of said first capacitance.

7. Control system according to claim 4, wherein said regulating means (REG) are arranged for providing a pulse of longer length than that of the preceding pulse across said control terminal of said first switching means (Q1) to increase said high voltage and to provide a pulse of shorter length than the preceding pulse across said control terminal of said first switching means to decrease said high voltage.

8. Control system according to claim 5, wherein said regulating means (REG) are arranged for providing a pulse of longer length than the preceding pulse across said control terminal of said second switching means (Q2) to increase said high voltage and for providing a pulse of shorter length than the preceding pulse across said control terminal of said second switching means to decrease said high voltage.

9. Control system according to claim 8, wherein said regulating means (REG) are also arranged for providing a pulse across the control terminal of said first switching means (Q1) to decrease the high voltage.

10. Control system according to any of claims 7 to 9, wherein the regulating means are also arranged for providing a very long pulse in the event of detection of a failure during the preceding command.

11. Servomechanism including a control system according to any of the preceding claims, **characterized in that** said servomechanism is selected from among the following elements: servomotor, stepping motor, couple motor, electromagnet, hands mobile above a dial, optical displays.

12. Servomechanism according to claim 11, wherein said servomechanism is an electrostatic motor formed by micro-electro-mechanical system technology (MEMS).

13. Portable electronic apparatus, in particular for a wristwatch including a servomechanism according to claims 12 or 13.

**Patentansprüche**

1. System zum Steuern einer Servoeinrichtung, enthaltend:

- ein Steuerglied, das zwischen einer ersten und einer zweiten Stellung verstellbar ist, wobei das Glied eine in Abhängigkeit von seiner Stellung veränderliche Kapazität (Ccomb) hat, wobei diese Kapazität (Ccomb) zwischen einer Minimalgröße (Ccomb-min) und einer Maximalgröße (Ccomb-max) variiert,

**dadurch gekennzeichnet, dass** das Steuersystem ferner enthält:

- Niederspannungsversorgungsmittel ($U_{DO}$).
- Spannungserhöhungsmittel (L, D, Q1; L, D, Q1, Q2), die mit den Anschlussklemmen der Niederspannungsversorgungsmitteln verbunden sind und am Ausgang eine Hochspannung (Uh) abgeben;
- Messmittel (Ca, Cb, Cref) zum Messen eines Wertes der veränderlichen Kapazität (Ccomb), die von den Niederspannungsversorgungsmitteln versorgt werden, wenn die Hochspannung erzeugt wird; und
- Regelungsmittel (REG) zum Regeln der Spannungserhöhungsmittel, die dazu vorgesehen sind, die abgegebene Hochspannung zu erhöhen, wenn eine Veränderung der Messwerte der Kapazität (Ccomb) unter einem von der Servoeinrichtung bestimmten Veränderungsschwellwert liegt, und um die abgegebene Hochspannung zu senken, wenn diese Veränderung über dem bestimmten Veränderungsschwellwert liegt, wobei die Veränderung der Messwerte der Kapazität es ermöglicht, die Verlagerungsgeschwindigkeit des verstellbaren Glieds und damit dessen Stellung herzuleiten.

2. Steuersystem nach Anspruch 1, bei dem das verstellbare Steuerglied ein elektrostatisches Betätigungsglied ist.

3. Steuersystem nach Anspruch 2, wobei das elektrostatische Betätigungsglied ein kammartiges Antriebsglied ist.

4. Steuersystem nach einem der Ansprüche 1 bis 3, wobei die Spannungserhöhungsmittel (L, D, Q1) eine Induktivität (L) in Reihe mit Entkopplungsmitteln (D) und ersten Schaltmitteln (Q1) mit einer Steuerklemme und zwei Stromklemmen aufweisen, wobei die Induktivität am Ausgang der Niederspannungsversorgungsmittel ($U_{DO}$) und der Entkopplungsmittel angeschlossen ist, deren Ausgang mit einer Stromklemme der Schaltmittel verbunden ist, wobei die andere Stromklemme der Schaltmittel an ein Referenzpotential angelegt ist und die Steuerklemme der Schaltmittel an den Ausgang der Regelungsmittel angeschlossen ist.

5. Steuersystem nach Anspruch 4, wobei die Spannungserhöhungsmittel (L, D, Q1, Q2) ferner zweite Schaltmittel (Q2) aufweisen, die zwischen dem Ausgang der Induktivität (L) und dem Referenzpotential angeschlossen sind.

6. Steuersystem nach einem der vorangehenden Ansprüche, wobei die Messmittel (Ca, Cb, Cref) zum Messen eines Wertes der variablen Kapazität (Ccomb) enthalten:

- einen ersten Zweig, der parallel zu den ersten Schaltmitteln (Q1) angeschlossen ist und in Reihe eine erste Kapazität (Cref) und eine zweite Kapazität (Cb) in einer Größenordnung über der der ersten Kapazität aufweist, und
- einen zweiten Zweig, der zwischen der variablen Kapazität (Ccomb) und dem Referenzpotential geschaltet ist und eine dritte Kapazität (Ca) in einer Größenordnung über der der ersten Kapazität aufweist.

7. Steuersystem nach Anspruch 4, wobei die Regelungsmittel (REG) dazu vorgesehen sind, einen Impuls mit einer längeren Dauer als die des vorherigen an die Steuerklemme der ersten Schaltmittel (Q1) abzugeben, um die Hochspannung zu erhöhen und einen Impuls mit kürzerer Dauer als die des vorherigen an die Steuerklemme der ersten Schaltmittel abzugeben, um die Hochspannung zu senken.

8. Steuersystem nach Anspruch 5, wobei die Regelungsmittel (REG) dazu vorgesehen sind, einen Impuls mit einer längeren Dauer als die des vorherigen an die Steuerklemme der zweiten Schaltmittel (Q2) abzugeben, um die Hochspannung zu erhöhen und einen Impuls mit kürzerer Dauer als die des vorherigen an die Steuerklemme der zweiten Schaltmittel abzugeben, um die Hochspannung zu senken.

9. Steuersystem nach Anspruch 8, wobei die Regelungsmittel (REG) ferner dazu vorgesehen sind, einen Impuls an die Steuerklemme der ersten Schaltmittel (Q1) abzugeben, um die Hochspannung zu senken.

10. Steuersystem nach einem der Ansprüche 7 bis 9, wobei die Regelungsmittel ferner dazu vorgesehen sind, bei Erfassung eines Fehlschlags während des vorhergehenden Befehls einen sehr langen Impuls abzugeben.

11. Servoeinrichtung mit einem Steuersystem nach irgendeinem der vorangehenden Ansprüche, **dadurch gekenn-**

**zeichnet, dass** die Servoeinrichtung ausgewählt ist aus folgenden Elementen: Servomotor, Schrittmotor, Drehmomentmotor, Elektromagnet, auf einem Zifferblatt verstellbare Zeiger, optische Anzeiger.

12. Servoeinrichtung nach Anspruch 11, wobei die Servoeinrichtung ein elektrostatischer Motor ist, der mit der Technologie mikroelektromechanischer Systeme (MEMS) ausgebildet ist.

13. Tragbares elektronisches Gerät, insbesondere Armbanduhr, mit einer Servoeinrichtung nach einem der Ansprüche 11 oder 12.

Fig. 1